# EUROPEAN PATENT SPECIFICATION

(11) **EP 0 711 735 B1**
(45) Date of publication and mention of the grant of the patent: **14.01.1998**
(21) Application number: 95307272.5
(22) Date of filing: 13.10.1995
(51) Int. Cl.: C03C 3/04, C08L 83/14, C08G 77/50, C04B 35/56

(54) **Method for the preparation of silicon oxycarbide**
Verfahren zur Herstellung von Silizium-Oxy-Karbid
Procédé pour la préparation de silicium-oxy-carbure

(30) Priority: 09.11.1994 JP 275002/94; 18.09.1995 JP 238465/95
(43) Date of publication of application: 15.05.1996
(73) Proprietor: DOW CORNING ASIA, Ltd., Tokyo 105 (JP)
(72) Inventor: Baney, Ronald Howard, Minato-ku, Tokyo 105 (JP); Eguchi, Katsuya, Minato-ku, Tokyo 105 (JP); Suzuki, Toshio, Minato-ku, Tokyo 105 (JP)
(74) Representative: Kyle, Diana

(56) References cited:
- WO-A-93/14040
- WO-A-95/03364
- FR-A- 2 647 777
- JOURNAL OF NON-CRYSTALLINE SOLIDS, vol. 176, no. 1, AMSTERDAM NL, pages 33-44, V. BELOT ET AL. 'silicon oxycarbide glasses with low o/si ratio from organosilicon precursors'

## Description

This invention relates to a method for the preparation of silicon oxycarbide that comprises firing organopolysiloxanes which are cured by a hydrosilylation reaction.

Silicon oxycarbide (or oxycarbide glass) comprises carbon contained in silica glass. Recent scientific and technical developments suggest that this material will have mechanical properties and anti-infrared properties that are different from those of ordinary glasses.

Glass is traditionally prepared by a variety of melting methods. Silicon oxycarbide, however, is considered to be intractable to this method of preparation. Therefore, several investigators have attempted to use low temperature sol-gel processes in its formation. Such processes have generally involved the hydrolysis and condensation of an organotrialkoxysilane plus colloidal silica followed by firing in an inert atmosphere.

The preparation of crack- and void-free dry gels by the sol-gel processes is, however, a tedious and difficult undertaking. Moreover, breakage and cracking can also occur during firing. It is well known that various drying parameters, like slow drying rate, and use of additive, must be used to obtain a gel with a well-ordered shape at the precursor stage.

US-A 4,472,510 teaches a method which requires the use of a trifunctional silane as a starting material. Such a silane limits the resulting silicon oxycarbide to low-carbon compositions. The carbon/silicon molar ratio of the resultant materials is 0.2 < C/Si < 0.5.

More recently, US-A 5,242,866, disclosed a method for the preparation of silicon oxycarbide in which the precursor is a gel prepared by the hydrosilylation-based cure of difunctional cyclosiloxane containing SiH and SiVi functionalities. The resultant gel is then fired at 1,200°C in an inert atmosphere. This method simplifies the drying procedure because of the hydrosilylation-based gelation process. Moreover, since the hydrosilylation reaction is an addition reaction, volatile components such as alcohol and water are not present during curing. Thus, the product does not undergo a cure-induced expansion or shrinkage.

US-A 5,242,866 provides fired products with a maximum carbon content of 30 weight %. In addition, the product has better heat resistance in air than silicon oxycarbide prepared by sol-gel techniques since the weight is lens than 0.6 weight % when heated in air to 1,000°C. While this method provides compositions in which C/Si content ranges from 1.01 to 1.51, it is difficult to contend that these values permit a full elaboration of the properties of silicon oxycarbide.

However, US-A 5,242,866 restricts the Si:C:O ratios in the final product since the precursor gel is a difunctional cyclosiloxane. Such a polysiloxane only contains difunctional units in which two oxygen atoms are bonded to each silicon atom and, thus, the ratio of Si:C:O will remain substantially constant regardless of increases or decreases in the amount of difunctional unit. One tactic for dealing with this problem is to enhance the precursor's carbon content by increasing the number of carbons in the Si-bonded organic radicals. However, this tactic results in a deterioration in the heat resistance of the fired oxycarbide in air because it also brings about an increase in the amount of free carbon.

WO 94/05675 describes the preparation of silicon oxycarbide from spirosiloxane compounds. In this method, spirosiloxane oligomers containing difunctional (RR'SiO_{2/2}) and tetrafunctional (SiO_{4/2}) units are cured by hydrosilylation and are then fired in an inert atmosphere to form silicon oxycarbide. C/Si molar ratios in the range of 1.06 < C/Si < 1.33 are disclosed. As with the art described above, the silicon oxycarbide produced is reported to have good shape characteristics.

These compounds, however, are composed of difunctional and tetrafunctional units and the tetrafunctional unit increases the Si and O content. Moreover, the element ratios are very restricted in this case, which makes adjustments in the carbon content even more difficult.

The object of the present invention is achieved by a method for the preparation of silicon oxycarbide which is characterized by heating, at 600°C to 1,500°C in an inert atmosphere, the cured product afforded by the platinum-catalyzed cure at a temperature not exceeding 300°C of
(D) an organopolysiloxane containing at least two SiH units in each molecule
   and
   at least 1 organopolysiloxane selected from the group consisting of:
   (A) an organopolysiloxane containing at least two R¹R²₂SiO_{1/2} units in each molecule,
   (B) an organopolysiloxane containing at least two R¹SiO_{3/2} units in each molecule, and
   (C) an organopolysiloxane containing at least one R¹R²₂SiO_{1/2} unit and at least one R¹SiO_{3/2} unit in each molecule,
   wherein R¹ represents C₂ to C₁₀ alkenyl radicals and R² independently represents monovalent organic radicals exclusive of alkenyl radicals.

The method of the present invention is advantageous in that it allows for a freely selectable variation in the C/Si molar ratio of the silicon oxycarbide product between 0.6 and 5.0. This allows for the simple preparation of a wide variety of silicon oxycarbide products.

The first step in the process of our invention is to mix:
(D) an organopolysiloxane containing at least two SiH units in each molecule;
   at least 1 organopolysiloxane selected from the group consisting of:
   (A) an organopolysiloxane containing at least two R¹R²₂SiO_{1/2} units in each molecule,
   (B) an organopolysiloxane containing at least two R¹SiO_{3/2} units in each molecule, and
   (C) an organopolysiloxane containing at least one R¹R²₂SiO_{1/2} unit and at least one R₁SiO_{3/2} unit in each molecule, wherein R¹ denotes C₂ to C₁₀ alkenyl radicals and R² independently denotes monovalent organic radicals exclusive of alkenyl radicals;
   and a platinum catalyst to form a curable composition.

The organopolysiloxane (A) contains at least two R¹R²₂SiO_{1/2} units in each molecule. R¹ represents C₂ to C₁₀ alkenyl radicals, and is exemplified by vinyl, allyl, propenyl, butenyl, pentenyl, and hexenyl. The R² is independently selected from non-alkenyl monovalent organic radicals. While no specific restrictions otherwise attach to said organic radicals, they will generally contain from 1 to 30 carbon atoms and preferably contain from 1 to 12 carbon atoms. They may also contain a heteroatom such as oxygen or halogen. No specific restrictions attach to said heteroatom as long as it does not negatively affect the hydrosilylation reaction. Haloalkyl radicals are provided as exemplary of the heteroatom-containing organic radicals.

R² is exemplified by alkyl radicals such as methyl, ethyl, propyl, and butyl; aryl radicals such as phenyl, tolyl, xylyl, mesityl, and naphthyl; and haloalkyl radicals such as chloromethyl, or trifluoropropyl. The R² bonded to the same silicon atom may readily differ from each other. For economic reasons, R¹ is preferably vinyl, allyl, and hexenyl and R² is methyl or phenyl. Vinyl is particularly preferred for R¹ and methyl is particularly preferred for R².

At least two R¹R²₂SiO_{1/2} units must be present in each molecule to obtain an unfired cured product of good quality. Each molecule preferably contains at least four R¹R²₂SiO_{1/2} units to achieve a cured product of even better quality.

It is recommended that organopolysiloxane (A) also contain a unit or units selected from the R²₃SiO_{1/2}, R²₂SiO_{2/2}, R²SiO_{3/2}, and SiO_{4/2}. This is due to the highly problematic nature of building an organopolysiloxane from only the R¹R²₂SiO_{1/2} unit. The R²₃SiO_{1/2} unit is optionally used to modify or regulate the molecular weight and adjust the R¹R²₂SiO_{1/2} unit content in the molecule. The combined content of the R¹R²₂SiO_{1/2} and R²₃SiO_{1/2} units in organopolysiloxane (A) preferably ranges from 5 mole% (inclusive) to 80 mole% (exclusive). Introduction of the R²₂SiO_{2/2} unit into the molecule imparts fluidity to organopolysiloxane (A) and, thereby, facilitates preparation and molding of the composition. The R²₂SiO_{2/2} unit also imparts flexibility to the cured product and, thereby, inhibits the cracking that can occur during thermosetting. The R²₂SiO_{2/2} unit content in organopolysiloxane (A) preferably ranges from 0 mole% (inclusive) to 50 mole% (exclusive).

The backbone-forming component of organopolysiloxane (A) preferably includes the R²SiO_{3/2} unit and/or SiO_{4/2} unit. Higher contents of R²SiO_{3/2} unit yield a harder cured product, but also serve to raise the composition viscosity and, thereby, to complicate the molding process. As a result, the R²SiO_{3/2} unit content in organopolysiloxane (A) preferably ranges from 30 mole% (inclusive) to 80 mole% (exclusive). The presence of the SiO_{4/2} unit is again preferred from the standpoint of preparing a good-quality cured product since this unit is entirely free of organic components and, therefore, does not evolve decomposition products during firing. Thus, its content is preferably as high as possible. However, increases in the SiO_{4/2} unit content are accompanied by the possibility of a difficult-to-control gelation. The content of the SiO_{4/2} unit in organopolysiloxane (A), therefore, preferably ranges from 35 mole% (inclusive) to 70 mole% (exclusive). The R²SiO_{3/2} unit and SiO_{4/2} unit may both be used in the backbone-forming component of organopolysiloxane (A) insofar as the essential features of the invention are not impaired. Still, no particular problems in terms of moldability and ease of synthesis are associated with the presence of just one of these units.

The organopolysiloxane (B) used in the present invention contains at least two R¹SiO_{3/2} units in each molecule. The instant R¹ and R² are defined as for organopolysiloxane (A), and their specific examples, preferred ranges, and so forth are also the same as above.

At least two R¹SiO_{3/2} units must be present in each molecule to obtain an unfired cured product of good quality. Each molecule preferably contains at least four R¹SiO_{3/2} units to yield cured product of even better quality.

Organopolysiloxane (B) preferably contains at least one unit selected from R²₃SiO_{1/2}, R²₂SiO_{2/2}, R²SiO_{3/2}, and SiO_{4/2}. The R²₃SiO_{1/2} unit is used to adjust or regulate the molecular weight and is preferably present in a range from 0 mole% (inclusive) to 70 mole% (exclusive). The R²₂SiO_{2/2} unit imparts fluidity to organopolysiloxane (B) and, thereby, facilitates preparation and molding of the composition. The R²₂SiO_{2/2} unit also imparts flexibility to the cured product and, thereby, inhibits the cracking that can occur during thermosetting. However, because the production of defects in the silicon oxycarbide is facilitated at high contents of R²₂SiO_{2/2} unit, the R²₂SiO_{2/2} unit content in organopolysiloxane (B) preferably ranges from 0 mole% (inclusive) to 50 mole% (exclusive).

The backbone-forming component of the organopolysiloxane (B) molecule may optionally contain the R²SiO_{3/2} unit and/or SiO_{4/2} unit. These optional units are used to increase the elastic modulus of the unfired cured product and to adjust the postfiring composition. Higher contents Of R²SiO_{3/2} unit yield a harder cured product, but also serve to raise the composition viscosity and, thereby, to complicate the molding process. As a result, the R²SiO_{3/2} unit content in organopolysiloxane (B) preferably ranges from 30 mole% (inclusive) to 80 mole% (exclusive). The SiO_{4/2} unit content is preferably as high as possible. However, increases in the SiO_{4/2} unit content are accompanied by the possibility of a difficult-to-control gelation. The SiO_{4/2} unit content in organopolysiloxane (B), therefore, preferably ranges from 35 mole% (inclusive) to 70 mole% (exclusive). The R²SiO_{3/2} unit and SiO_{4/2} unit may both be present insofar as the essential features of the invention are not impaired. Nevertheless, no particular problems in terms of moldability and ease of synthesis are associated with the presence of just one of these units. Of course, organopolysiloxane (B) composed of only the R¹SiO_{3/2} unit may be used depending on the particular application.

The organopolysiloxane (C) used in our invention for the preparation of silicon oxycarbide is synthesized to contain at least one R¹R²₂SiO_{1/2} unit and at least one R¹SiO_{3/2} unit in each molecule. The instant R¹ and R² are defined as for organopolysiloxane (A), and their specific examples, preferred ranges, and so forth are also the same as above.

To obtain an unfired cured product of good quality, each molecule of organopolysiloxane (C) must contain at least one R¹R²₂SiO_{1/2} unit and at least one R¹SiO_{3/2} unit and, therefore, in total at least 2 of these units considered collectively. Each molecule preferably contains at least four R¹SiO_{3/2} units to obtain cured product of even better quality.

Organopolysiloxane (C) preferably contains at least one unit selected from R²₃SiO_{1/2}, R²₂SiO_{2/2}, R²SiO_{3/2}, and SiO_{4/2}. The R²₃SiO_{1/2} unit is used to adjust or regulate the molecular weight and is preferably present in a range from 0 mole% (inclusive) to 70 mole% (exclusive). Introduction of the R²₂SiO_{2/2} unit into the molecule imparts fluidity to organopolysiloxane (C) and, thereby, facilitates preparation and molding of the composition. The R²₂SiO_{2/2} unit also imparts flexibility to the cured product and, thereby, inhibits the cracking that can occur during thermosetting. However, because the production of defects in the silicon oxycarbide is facilitated at high R²₂SiO_{2/2} unit contents, the R²₂SiO_{2/2} unit content in organopolysiloxane (C) preferably ranges from 0 mole% (inclusive) to 50 mole% (exclusive).

The backbone-forming component of the organopolysiloxane (C) molecule may optionally contain the R²SiO_{3/2} unit and/or SiO_{4/2} unit. These optional units are used to increase the elastic modulus of the unfired cured product and to adjust the postfiring composition. Higher contents of R²SiO_{3/2} unit yield a harder cured product, but also serve to raise the composition viscosity and thereby complicate the molding process. As a result, the R²SiO_{3/2} unit content in organopolysiloxane (C) preferably ranges from 0 mole% (inclusive) to 80 mole% (exclusive). The SiO_{4/2} unit content is preferably as high as possible. However, increases in the SiO_{4/2} unit content are accompanied by the possibility of a difficult-to-control gelation. The SiO_{4/2} unit content in organopolysiloxane (C), therefore, preferably ranges from 0 mole% (inclusive) to 70 mole% (exclusive). The R²SiO_{3/2} unit and SiO_{4/2} unit may both be present insofar as the essential features of the invention are not impaired. Nevertheless, no particular problems in terms of moldability and ease of synthesis are associated with the presence of just one of these units. Of course, organopolysiloxane (C) composed of only the R¹SiO_{3/2} and R¹R²₂SiO_{1/2} units may be used depending on the particular application.

The organopolysiloxane (D) used in this invention contains at least two SiH groups in each molecule. In specific terms, its essential constituent component is selected from the HR³₂SiO_{1/2}, HR³SiO_{2/2}, and HSiO_{3/2} units. R³ independently represents monovalent organic radicals, but is not otherwise specifically restricted. However, it will generally contain from 1 to 30 carbon atoms and preferably contains from 1 to 12 carbon atoms. It may also contain a heteroatom such as oxygen or halogen. No specific restrictions attach to the heteroatom as long as it does not negatively affect the hydrosilylation reaction. Haloalkyl radicals are provided as exemplary of the heteroatom-containing organic radicals.

R³ is exemplified by alkyl radicals such as methyl, ethyl, propyl, and butyl; aryl radicals such as phenyl, tolyl, xylyl, mesityl, and naphthyl; and haloalkyl radicals such as chloromethyl, or trifluoropropyl. The R³ bonded to the same silicon may differ from each other. For economic reasons, R³ is preferably methyl and phenyl with methyl being particularly preferred.

Each molecule must contain at least two SiH groups to obtain an unfired cured product of good quality. Each molecule preferably contains at least four SiH groups to attain a cured product of even better quality.

When the HR³₂SiO_{1/2} unit is selected as the essential constituent component of organopolysiloxane (D), the R³SiO_{3/2} unit and/or SiO_{4/2} unit is preferably introduced for purposes of forming the backbone of organopolysiloxane (D) due to the highly problematic nature of building the organopolysiloxane from only the HR³₂SiO_{1/2} unit. Higher R³SiO_{3/2} unit contents in the instant organopolysiloxane (D) also yield a harder cured product, but again also serve to raise the composition viscosity and thereby complicate the molding process. As a result, the R³SiO_{3/2} unit content in organopolysiloxane (D) preferably ranges from 30 mole% (inclusive) to 80 mole% (exclusive). The SiO_{4/2} unit content is preferably as high as possible. However, increases in the SiO_{4/2} unit content are accompanied by the possibility of a difficult-to-control gelation. The SiO_{4/2} unit content in organopolysiloxane (D), therefore, preferably ranges from 35 mole% (inclusive) to 70 mole% (exclusive). The R³SiO_{3/2} unit and SiO_{4/2} unit may both be present insofar as the essential features of the invention are not impaired. Nevertheless, no particular problems in terms of moldability and ease of synthesis are associated with the presence of just one of these units.

Units other than the essential units may optionally be present. For example, the R³₃SiO_{1/2} unit may be added on an optional basis to regulate or modify the molecular weight and adjust the amount of SiH in the molecule. The combined content of the R³₃SiO_{1/2} and HR³₂SiO_{1/2} units preferably ranges from 5 mole% (inclusive) to 80 mole% (exclusive). The R³₂SiO_{2/2} unit may be optionally introduced to impart fluidity to organopolysiloxane (D) and, thereby, facilitate preparation and molding of the composition. The R³₂SiO_{2/2} unit also imparts flexibility to the cured product and thereby inhibits the cracking that can occur during thermosetting. However, high R³₂SiO_{2/2} unit contents facilitate the development of defects during firing. The R³₂SiO_{2/2} unit content in organopolysiloxane (D), therefore, preferably ranges from 1 mole% (inclusive) to 50 mole% (exclusive).

Insofar as the essential features of the invention are not impaired, several or all of the HR³₂SiO_{1/2}, HR³SiO_{2/2}, and HSiO_{3/2} units may be selected as essential constituent units of the organopolysiloxane (D) of the present invention. Also usable is an organopolysiloxane (D) composed of only the HSiO_{3/2} unit.

The organopolysiloxanes used of our present invention are generally known as silicone resins. Methods for their preparation are well known and are described in Shirikoon Handobukku [English title: Silicone Handbook], edited by Kunio Itoh, Chapters 12 and 13, pages 466 to 515, Nikkan Kogyo Shinbunsha (1990); Saishin Shirikoon Gijutsu [English title: The Latest Silicone Technology], edited by Makoto Kumada and Tadashi Wada, Chapter 3, pages 80 to 96, CMC (1986); and Toshio Suzuki, Netsukoukasei Jushi [English title: Thermosetting Resins], Volume 15, Number 1, pages 9 to 16 (1994).

The present invention provides an optimal means, based on adjusting the component proportions of the polysiloxane in the cured product, for obtaining silicon oxycarbide glass in the 0.6 < C/Si < 5.0 range. Insofar as mixing is possible, the use of a mixture of at least 2 of organopolysiloxanes (A), (B), and (C) is an ideal method for adjusting the composition of the silicon oxycarbide and is encompassed by the present invention. Moreover, the use of mixtures of all of these organopolysiloxanes is an optimal method for precisely adjusting the composition of the silicon oxycarbide product.

A platinum catalyst must be used in our invention for the cure of organopolysiloxane (D) and the organopolysiloxanes (A), (B), and (C). This catalyst functions to accelerate the curing reaction and comprises those catalysts known as hydrosilylation catalysts. This catalyst is not specifically restricted as to type and may be any platinum catalyst ordinarily used for the hydrosilylation reaction or addition-type reaction of silicone rubbers. Examples are platinum chloride, chloroplatinic acid, platinum-olefin complexes, platinum-phosphine complexes, platinum-vinylsiloxane complexes, and solutions of the preceding. The quantity of platinum catalyst addition is also not crucial. However, suitable additions will yield a molar ratio of from 1/100,000 to 1/100 and preferably 1/10,000 to 1/500 as platinum metal based on the total alkenyl in organopolysiloxanes (A), (B), and (C).

It is recommended that the platinum-catalyzed cure of the organopolysiloxane mixture be conducted in the presence of a compound known as a cure retarder selected from unsaturated organic compounds, amine compounds, and phosphine compounds. The unsaturated organic compounds are exemplified by acetylenic alcohols such as 2-methyl-3-butyn-2-ol, or 2-phenyl-3-butyn-2-ol, and by the carboxylate esters such as dimethyl fumarate, diethyl fumarate, dimethyl maleate, and diethyl maleate. The amine compounds are exemplified by trimethylamine, triethylamine, aniline, toluidine, xylidine, pyridine, and tetramethylethylenediamine. The phosphine compounds are exemplified by trimethylphosphine, triethylphosphine, diethylphenylphosphine, and triphenylphosphine. These cure retarders preferentially coordinate with the platinum metal and inhibit the start of the curing reaction upon mixing. This allows for processing, e.g., molding and the like. When added in appropriate quantities, the cure retarder is readily eliminated from the platinum metal by heating and, thug, will not impair the ensuing curing reaction nor affect the physical properties of the cured product. When added in excess, however, the cure retarder will negatively affect the cure reaction and the physical properties of the cured product. The cure retarder is suitably added at from 1 to 1,000 times on a molar basis, and preferably at from 10 to 100 times on a molar basis, based on the platinum metal in the added platinum catalyst.

Our organopolysiloxane composition containing platinum catalyst and cure retarder cures rapidly in air at temperatures not exceeding 300°C. Good-quality cured products are obtained preferably at curing temperatures from 50°C to 200°C and more preferably from 60°C to 150°C. Uniform crosslinking is often obtained through a precure at temperatures up to 100°C followed by a postcure at 100°C to 300°C to complete the hydrosilylation reaction. The rate-of-rise in the temperature during curing is not crucial and is varied depending on the desired productivity and the capabilities of the particular heating device. The preferred rate-of-rise in the temperature ranges from 0.01°C/minute to 10°C/minute, and more preferably from 0.1°C/minute to 3°C/minute. The holding period at the curing temperature is also not crucial and is determined on the basis of economics. Thus, the temperature is typically dropped immediately after having achieved the curing temperature, but the temperature may also be held for several hours or more at the curing temperature and then later dropped. To remove the internal stresses that may accumulate in the cured product, relatively longer periods of time are preferably used for cooling after thermosetting. The cooling rate is preferably 0.1°C/minute to 10°C/minute, and more preferably is 0.5°C/minute to 3°C/minute.

The operable molding methods are those molding methods used for ordinary thermosetting resins, e.g., compression molding, reaction injection molding, casting, and the like.

Firing the cured organopolysiloxane product at 600°C to 1,500°C in an inert atmosphere yields silicon oxycarbide. The preferred firing temperatures range from 800°C to 1,300°C, and the particularly preferred firing temperatures range from 1,000°C to 1,200°C.

As used herein, an inert atmosphere refers to an atmosphere that does not adversely affect production of the silicon oxycarbide and is preferably a helium, nitrogen, or argon atmosphere. More preferably, it is a nitrogen or argon atmosphere. The pressure of the firing atmosphere is not crucial, but pressures not exceeding 10 atmospheres are used to produce finer, denser firings. Firing in a vacuum is recommended for efficiently removing the decomposition gases that are evolved up to 800°C.

To inhibit cracking and sample damage, it is recommended chat relatively longer periods of time be used to raise the temperature during firing. Taking into consideration economics and the capabilities of the usual electric furnaces, a rate of temperature rise of from 0.1°C/minute to 20°C/minute is preferred, and a rate of temperature rise of from 1°C/minute to 10°C/minute is particularly preferred. The holding period at the firing temperature is not crucial and is determined on the basis of economics. Thus, the temperature is typically dropped immediately after having achieved the firing temperature, but the temperature may also be held for several hours or more at the firing temperature and then later dropped. To inhibit cracking and sample damage, it is again recommended that relatively longer periods of time be used for cooling. Taking into consideration economics and the capabilities of the usual electric furnaces, cooling rates of 0.1°C/minute to 20°C/minute are preferred and cooling rates from 1°C/minute to 10°C/minute are particularly preferred.

### Synthesis of SiVi-functional organopolysiloxanes

### Synthesis Example 1

The following were introduced into a reactor and heated to 40°C to 50°C with stirring: 70 g of 1,3-divinyl-1,1,3,3-tetramethyldisiloxane, 12 g of hexamethyldisiloxane, 20 g of ethanol, 45 g of water, and 21 mL of 35% concentrated hydrochloric acid. 104 g of tetraethyl orthosilicate was then added dropwise. The reaction was followed by extraction with hexane. The extract was neutralized with saturated aqueous sodium bicarbonate and then dried over sodium sulfate. Removal of the solvent subsequently yielded a colorless polymer in a yield of 85%.

Gel permeation chromatography, nuclear magnetic resonance spectrochemical analysis, and determination of the vinyl radical yielded the following average component formula for this polymer.

(ViMe₂SiO_{1/2})_{1.5}(Me₃SiO_{1/2})_{0.3}(SiO_{4/2})

Table 1 reports SiVi-functional organopolysiloxanes synthesized as described in Synthesis Example 1.

**Table 1**

| Synthesis Example | component formula |
|---|---|
| 2 | (ViMe₂SiO_{1/2})_{1.8}(Me₂SiO_{2/2})_{0.2}(SiO_{4/2}) |
| 3 | (ViMe₂SiO_{1/2})_{0.3}(MeSiO_{3/2}) |
| 4 | (ViMe₂SiO_{1/2})_{1.5}(Ph₂MeSiO_{1/2})_{0.3}(SiO_{4/2}) |
| 5 | (Me₃SiO_{1/2})_{0.3}(ViSiO_{3/2}) |
| 6 | (Me₃SiO_{1/2})_{0.2}(Ph₂MeSiO_{1/2})_{0.1}(ViSiO_{3/2}) |
| 7 | (Ph₂MeSiO_{1/2})_{0.3}(ViSiO_{3/2}) |
| 8 | (ViMe₂SiO_{1/2})_{1.8}(SiO_{4/2}) |
| 9 | (ViMe₂SiO_{1/2})_{0.6}(Me₃SiO_{1/2})_{0.1}(SiO_{4/2}) |
| 10 | ViSiO_{3/2} |
| 11 | (ViMe₂SiO_{1/2})_{1.0}(Ph₂MeSiO_{1/2})_{0.0}(SiO_{4/2}) |
| 12 | (ViPh₂SiO_{1/2})_{1.9}(SiO_{4/2}) |
| 13 | (ViMe₂SiO_{1/2})_{0.6}(Ph₂MeSiO_{1/2})_{0.6}(PhSiO_{3/2}) |

### Synthesis of SiH-functional organopolysiloxanes

### Synthesis Example 14

The following were introduced into a reactor and cooled to -10°C with stirring: 100 g of 1,1,3,3-tetramethyldisiloxane, 46 g of ethanol, 122 g of water, and 65 mL of 35% concentrated hydrochloric acid. 319 g of tetraethyl orthosilicate was then added dropwise. The reaction was followed by extraction with hexane. The extract was neutralized with saturated aqueous sodium bicarbonate and then dried over sodium sulfate. Removal of the solvent subsequently yielded a colorless polymer in a yield of 70%.

Gel permeation chromatography, nuclear magnetic resonance spectrochemical analysis, and determination of the vinyl radical yielded the following average component formula for this polymer.

(HMe₂SiO_{1/2})_{1.0}(SiO_{4/2})

Table 2 reports SiH-functional organopolysiloxanes synthesized as described in Synthesis Example 14.

**Table 2**

| Synthesis Example | component formula |
|---|---|
| 15 | (HMe₂SiO_{1/2})_{1.8}(Me₂SiO_{2/2})_{0.2}(SiO_{4/2}) |
| 16 | (HMe₂SiO_{1/2})_{0.3}(MeSiO_{3/2}) |
| 17 | (HMe₂SiO_{1/2})_{1.5}(Phe2MeSiO_{1/2})_{0.3}(SiO_{4/2}) |
| 18 | (Me₃SiO_{1/2})_{1/2}(HMeSiO_{2/2})_{0.3}(SiO_{4/2}) |
| 19 | (Me₃SiO_{1/2})_{1.0}(HSiO_{3/2}) |
| 20 | (HMe₂SiO_{1/2})_{0.6}(Me₃SiO_{1/2})_{0.1}(SiO_{4/2}) |
| 21 | (HMe₂SiO_{1/2})_{0.2}(Ph₂MeSiO_{1/2})_{0.2}(MeSiO_{3/2}) |
| 22 | (Me₃SiO_{1/2})_{0.3}(HMeSiO_{2/2})_{0.2}(MeSiO_{3/2}) |
| 23 | (HMe₂SiO_{1/2})_{0.2}(Ph₂MeSiO_{1/2})_{0.1}(MeSiO_{3/2}) |
| 24 | (Ph₂MeSiO_{1/2})_{0.1}(Me₃SiO_{1/2})_{0.9}(HSiO_{3/2}) |
| 25 | HSiO_{3/2} |
| 26 | (HMe₂SiO_{1/2})_{0.8}(Ph₂MeSiO_{1/2})_{0.9}(SiO_{4/2}) |
| 27 | (HPh₂SiO_{1/2})_{1.7}(SiO_{4/2}) |
| 28 | (HMee2SiO_{1/2})_{1.5}(Ph₂MeSiO_{1/2})_{0.5}(SiO_{4/2}) |

### Example 1

22.4 g of vinyl-functional organopolysiloxane from Synthesis Example 1 and 18.5 g of SiH-functional organopolysiloxane from Synthesis Example 14 were mixed together. The following were then thoroughly mixed into this mixture: 12.6 mg of 2-methyl 3-butyn-2-ol (cure rate regulator) and 2.9 mg (as platinum metal) of a toluene solution of tris(tetramethyldivinyldisiloxane)diplatinum(0), as curing catalyst. The mixture was degassed in a vacuum and thereafter heated at 60°C for 1 hour. The cured sample was subjected to a secondary cure for an additional 2 hours at 120°C. The resulting cured organopolysiloxane product was heated to 1,200°C at a rate-of-rise of 5°C/minute under an argon atmosphere, held at this temperature for 30 minutes, and then cooled to 50°C over 10 hours. The component ratio in the silicon oxycarbide thereby obtained was SiC_{1.32}O_{1.08}.

### Example 2

22.7 g of vinyl-functional organopolysiloxane from Synthesis Example 8 and 20 g of SiH-functional organopolysiloxane from synthesis Example 18 were mixed together. The following were then thoroughly mixed into this mixture: 2.5 mg of 2-methyl-3-butyn-2-ol (cure rate regulator) and, 5.9 mg (as platinum metal) of a 2-propanol solution of chloroplatinic acid, as curing catalyst. The mixture was degassed in a vacuum and thereafter heated at 60°C for 1 hour. The cured sample was subjected to a secondary cure for an additional 2 hours at 120°C. The resulting cured organopolysiloxane product was heated to 1,200°C at a rate-of-rise of 5°C/minute under an argon atmosphere, held at this temperature for 30 minutes, and then cooled to 50°C over 10 hours The component ratio in the silicon oxycarbide thereby obtained was SiC_{1.11}O_{1.17}.

### Example 3

20.6 g of vinyl-functional organopolysiloxane from Synthesis Example 5 and 17.4 g of SiH-functional organopolysiloxane from Synthesis Example 16 were mixed together. The following were then thoroughly mixed into this mixture: 5 mg of 2-methyl-3-butyn-2-ol (cure rate regulator) and 1.2 mg (as platinum metal) of a toluene solution of tris(tetramethyldivinyldisiloxane)diplatinum(0), as curing catalyst. The mixture was degassed in a vacuum and thereafter heated at 60°C for 1 hour. The cured sample was subjected to a secondary cure for an additional 2 hours at 120°C. The resulting cured organopolysiloxane product was heated to 1,200°C at a rate-of-rise of 5°C/minute under an argon atmosphere, held at this temperature for 30 minutes, and then cooled to 50°C over 10 hours. The component ratio in the silicon oxycarbids thereby obtained was SiC_{0.95}O_{1.34}.

### Example 4

23.2 g of vinyl-functional organopolysiloxane from Synthesis Example 6 and 20.6 g of SiH-functional organopolysiloxane from Synthesis Example 22 were mixed together. The following were then thoroughly mixed into this mixture: 3.3 mg of 2-methyl-3-butyn-2-ol (cure rate regulator) and 0.76 mg (as platinum metal) of a 2-propanol solution of chloroplatinic acid, as curing catalyst. The mixture was degassed in a vacuum and thereafter heated at 60°C for 1 hour. The cured sample was subjected to a secondary cure for an additional 2 hours at 120°C. The resulting cured organopolysiloxane product was heated to 1,200°C at a rate-of-rise of 5°C/minute under an argon atmosphere, held at this temperature for 30 minutes, and then cooled to 50°C over 10 hours. The component ratio in the silicon oxycarbide thereby obtained was SiC_{1.06}O_{1.18}.

### Example 5

20.6 g of vinyl-functional organopolysiloxane from Synthesis Example 5 and 26.8 g of SiH-functional organopolysiloxane from Synthesis Example 19 were mixed together. The following were then thoroughly mixed into this mixture: 16.8 mg of 2-methyl-3-butyn-2-ol (cure rate regulator) and 3.9 mg (as platinum metal) of a toluene solution of dichlorobistriphenylphosphine platinum(II), as curing catalyst. The mixture was degassed in a vacuum and thereafter heated at 100°C for 10 hours. The cured sample was subjected to a secondary cure for an additional 5 hours at 150°C. The resulting cured organopolysiloxane product was heated to 1,200°C at a rate-of-rise of 5°C/minute under an argon atmosphere, held at this temperature for 30 minutes, and then cooled to 50°C over 10 hours. The component ratio in the silicon oxycarbide thereby obtained was SiC_{1.15}O_{1.14}.

### Examples 6 to 20

Examples 6 to 20 were run using the procedure described in Example 1. Table 3 reports the nature and quantity of addition of the organopolysiloxanes, platinum catalysts, and cure-rate regulator that were employed as well as the component ratios in the silicon oxycarbides yielded by firing.

**Table 3**

| Ex. | SiVi-functional organopolysiloxane | | SiH-functional organopolysiloxane | | platinum catalyst | | 2-methyl-3-butyn-2-ol (mg) | SiCO component ratio |
|---|---|---|---|---|---|---|---|---|
| | synthesis example no. (*1) | quantity of addition (g) | synthesis example no. (*2) | quantity of addition (g) | amount of Pt metal added (mg) | type (*3) | | |
| 6 | 2 | 25 | 15 | 20.1 | 3.6 | (2) | 15.5 | SiC_{1.24}O_{1.08} |
| 7 | 3 | 32 | 16 | 29.6 | 1.9 | (2) | 8.4 | SiC_{0.99}O_{1.37} |
| 8 | 4 | 33 | 17 | 28.2 | 3.6 | (3) | 15.9 | SiC_{1.92}O_{1.08} |
| 9 | 9 | 17 | 20 | 14.8 | 1.6 | (2) | 6.8 | SiC_{0.76}O_{1.41} |
| 10 | 6 | 3.7 | 21 | 20 | 0.62 | (1) | 2.6 | SiC_{1.83}O_{1.19} |
| 11 | 6 | 3.9 | 23 | 18 | 0.65 | (1) | 2.8 | SiC_{1.45}O_{1.26} |
| 12 | 5 | 28 | 20 | 49.2 | 5.2 | (2) | 22.7 | SiC_{0.81}O_{1.34} |
| 13 | 7 | 27 | 19 | 25.9 | 3.7 | (3) | 16.1 | SiC_{1.78}O_{1.16} |
| 14 | 6 | 18 | 19 | 20.9 | 3.0 | (2) | 13 | SiC_{1.28}O_{1.05} |
| 15 | 6 | 21 | 24 | 26.6 | 3.5 | (3) | 15.2 | SiC_{1.56}O_{1.14} |
| 16 | 10 | 23 | 25 | 16.1 | 5.6 | (2) | 24.4 | SiC_{0.63}O_{1.61} |
| 17 | 11 | 18 | 26 | 20.5 | 1.0 | (1) | 4.4 | SiC_{2.34}O_{1.23} |
| 18 | 12 | 19 | 27 | 17.2 | 1.4 | (2) | 6.3 | SiC_{4.95}O_{1.29} |
| 19 | 10 | 5 | 25 | 3.5 | 1.6 | (2) | 6.9 | SiC_{2.93}O_{1.26} |
| | 12 | 5 | 27 | 4.5 | | | | |
| 20 | 13 | 20 | 28 | 6.7 | 0.75 | (1) | 3.2 | SiC_{3.42}O_{1.15} |

| | | | | | | | | |
|---|---|---|---|---|---|---|---|---|
| *1 : Indicates the number of the synthesis example from which the SiVi-functional organopolysiloxane was taken. | | | | | | | | |
| *2 : Indicates the number of the synthesis example from which the SiH-functional organopolysiloxane was taken. | | | | | | | | |
| *3 : Types of platinum catalysts added. (1) toluene solution of tris(tetramethyldivinyldisiloxane)diplatinum(0) (2) 2-propanol solution of chloroplatinic acid (3) toluene solution of dichlorobistriphenylphosphine platinum (II) | | | | | | | | |

## Claims

1. A method for the preparation of silicon oxycarbide comprising:
mixing components comprising
(I) a first organopolysiloxane containing at least two SiH units in each molecule,
(II) a second organopolysiloxane comprising at least one organopolysiloxane selected from the group consisting of:
(A) an organopolysiloxane containing at least two R¹R²₂SiO_{1/2} units in each molecule,
(B) an organopolysiloxane containing at least two R¹SiO_{3/2} units in each molecule, and
(C) an organopolysiloxane containing at least one R¹R²₂SiO_{1/2} unit and at least one R₁SiO_{3/2} unit in each molecule,
wherein R¹ denotes C₂ to C₁₀ alkenyl radicals and R² independently denotes monovalent organic radicals exclusive of alkenyl radicals,
and
(III) a platinum catalyst,
to form a curable composition;
curing the curable composition at a temperature not exceeding 300°C; and
heating the cured product at 600°C to 1,500°C in an inert atmosphere.

2. The method according to Claim 1 wherein the second organopolysiloxane also contains at least one unit selected from the group consisting of R²₃SiO_{1/2}, R²₂SiO_{2/2}, R²SiO_{3/2}, and SiO_{4/2}, wherein R² independently denotes monovalent organic radicals exclusive of alkenyl radicals.

3. The method according to Claim 1 wherein the first organopolysiloxane containing at least two SiH units in each molecule is comprised of units selected from the group consisting of HR³₂SiO_{1/2}, HR³SiO_{2/2}, and HSiO_{3/2}, wherein R³ independently denotes monovalent organic radicals.

4. The method according to Claim 1 wherein the first organopolysiloxane also contains at least one unit selected from the group consisting of R³₃SiO_{1/2}, R³₂SiO_{2/2}, R³SiO_{3/2}, and SiO_{4/2}, wherein R³ independently denotes monovalent organic radicals.

5. The method according to claim 1 wherein the carbon/silicon molar ratio of the silicon oxycarbide is 0.6 to 5.0.

6. The method according to claim 1 wherein the curable composition also contains a cure retarder.

7. The method according to claim 1 wherein R¹ is selected from the group consisting of vinyl, allyl and hexenyl, and R² is independently selected from the group consisting of methyl and phenyl.

## Patentansprüche

1. Verfahren zur Herstellung von Siliciumoxycarbiden, umfassend:
Mischen von Komponenten, umfassend
(I) ein erstes Organopolysiloxan mit wenigstens zwei SiH-Einheiten in jedem Molekül,
(II) ein zweites Organopolysiloxan, umfassend wenigstens ein Organopolysiloxan, ausgewählt aus der Gruppe, bestehend aus:
(A) einem Organopolysiloxan mit wenigstens zwei R¹R²₂SiO_{1/2}-Einheiten in jedem Molekül,
(B) einem Organopolysiloxan mit wenigstens zwei R¹SiO_{3/2}-Einheiten in jedem Molekül und
(C) einem Organopolysiloxan mit wenigstens einer R¹R²₂SiO_{1/2}-Einheit und wenigstens einer R¹SiO_{3/2}-Einheit in jedem Molekül,
wobei R¹ einen C₂ bis C₁₀-Alkenylrest bezeichnet und R² unabhängig voneinander einen einwertigen organischen Rest, ausgenommen Alkenylreste, bezeichnet,
und
(III) einen Platinkatalysator,
um eine härtbare Zusammensetzung auszubilden;
Härten der härtbaren Zusammensetzung bei einer Temperatur, die 300°C nicht übersteigt, und
Erhitzen des gehärteten Produkts auf 600 bis 1.500°C in einer inerten Atmosphäre.

2. Verfahren nach Anspruch 1, wobei das zweite Organopolysiloxan ebenfalls wenigstens eine Einheit, ausgewählt aus der Gruppe, bestehend aus R²₃SiO_{1/2}, R²₂SiO_{2/2}, R²SiO_{3/2} und SiO_{4/2}, enthält, wobei R² unabhängig voneinander für einen einwertigen organischen Rest, ausgenommen Alkenylreste, steht.

3. Verfahren nach Anspruch 1, wobei das erste Organopolysiloxan, das wenigstens zwei SiH-Einheiten in jedem Molekül enthält, Einheiten enthält, die aus der Gruppe, bestehend aus HR³₂SiO_{1/2}, Hr³SiO_{2/2} und HSiO_{3/2}, ausgewählt sind, worin R³ unabhängig voneinander einen einwertigen organischen Rest bezeichnet.

4. Verfahren nach Anspruch 1, wobei das erste Organopolysiloxan ebenfalls wenigstens eine Einheit, ausgewählt aus der Gruppe, bestehend aus R³₃SiO_{1/2}, R³₂SiO_{2/2}, R³SiO_{3/2} und SiO_{4/2}, enthält, worin R³ unabhängig voneinander einen einwertigen organischen Rest bezeichnet.

5. Verfahren nach Anspruch 1, wobei das molare Verhältnis von Kohlenstoff:Silicium des Siliciumoxycarbids 0,6 bis 5,0 beträgt.

6. Verfahren nach Anspruch 1, wobei die härtbare Zusammensetzung ebenfalls einen Härtungsverzögerer enthält.

7. Verfahren nach Anspruch 1, wobei R¹ ausgewählt ist aus der Gruppe, bestehend aus Vinyl, Allyl und Hexenyl, und R² unabhängig voneinander ausgewählt ist aus der Gruppe, bestehend aus Methyl und Phenyl.

## Revendications

1. Un procédé pour la préparation d'oxycarbure de silicium consistant à :
mélanger des composants comprenant
(I) un premier organopolysiloxane contenant au moins deux motifs SiH dans chaque molécule,
(II) un second organopolysiloxane comprenant au moins un organopolysiloxane choisi dans le groupe formé par :
(A) un organopolysiloxane contenant au moins deux motifs R¹R²₂SiO_{1/2} dans chaque molécule,
(B) un organopolysiloxane contenant au moins deux motifs R¹SiO_{3/2} dans chaque molécule, et
(C) un organopolysiloxane contenant au moins un motif R¹R²₂SiO_{1/2} et au moins un motif R₁SiO_{3/2} dans chaque molécule,
où R¹ représente des radicaux alcényles en C₂ à C₁₀ et R² représente indépendamment des radicaux organiques monovalents à l'exclusion de radicaux alcényles, et
(III) un catalyseur au platine,
pour former une composition durcissable ;
faire durcir la composition durcissable à une température ne dépassant pas 300°C ; et
chauffer le produit durci entre 600°C et 1500°C dans une atmosphère inerte.

2. Le procédé selon la revendication 1, dans lequel le second organopolysiloxane contient également au moins un motif choisi dans le groupe formé par R²₃SiO_{1/2}, R²₂SiO_{2/2}, R²SiO_{3/2} et SiO_{4/2}, où R² représente indépendamment des radicaux organiques monovalents à l'exclusion de radicaux alcényles.

3. Le procédé selon la revendication 1, dans lequel le premier organopolysiloxane contenant au moins deux motifs SiH dans chaque molécule est formé de motifs choisis dans le groupe formé par HR³₂SiO_{1/2}, HR³SiO_{2/2} et HSiO_{3/2}, où R³ représente indépendamment des radicaux organiques monovalents.

4. Le procédé selon la revendication 1, dans lequel le premier organopolysiloxane contient également au moins un motif choisi dans le groupe formé par R³₃SiO_{1/2}, R³₂SiO_{2/2}, R³SiO_{3/2} et SiO_{4/2}, où R³ représente indépendamment des radicaux organiques monovalents.

5. Le procédé selon la revendication 1, dans lequel le rapport molaire carbone/silicium de l'oxycarbure de silicium est de 0,6 à 5,0.

6. Le procédé selon la revendication 1, dans lequel la composition durcissable contient également un retardateur de durcissement.

7. Le procédé selon la revendication 1, dans lequel R¹ est choisi dans le groupe formé par les radicaux vinyle, allyle ou hexényle, et R² est choisi indépendamment dans le groupe formé par les radicaux méthyle et phényle.
